# EUROPÄISCHE PATENTSCHRIFT

(11) **EP 3 864 956 B1**
(45) Veröffentlichungstag und Bekanntmachung des Hinweises auf die Patenterteilung: **14.12.2022**
(21) Anmeldenummer: 20157359.9
(22) Anmeldetag: 14.02.2020
(51) Int. Cl.: A01G 3/053, A01G 3/06, A01G 3/08

(54) **HANDGEFÜHRTES GARTEN-, FORST- UND/ODER BAUBEARBEITUNGSGERÄT UND VERFAHREN ZUM BETREIBEN EINES HANDGEFÜHRTEN GARTEN-, FORST- UND/ODER BAUBEARBEITUNGSGERÄTS**
MANUALLY GUIDED GARDEN, FORESTRY AND / OR CONSTRUCTION MACHINERY AND METHOD FOR OPERATING MANUALLY GUIDED GARDEN, FORESTRY AND / OR CONSTRUCTION MACHINERY
APPAREIL DE JARDINAGE, DE FORESTERIE ET/OU DE CONSTRUCTION GUIDÉ À LA MAIN ET PROCÉDÉ DE FONCTIONNEMENT D'UN APPAREIL DE JARDINAGE, DE FORESTERIE ET/OU DE CONSTRUCTION GUIDÉ À LA MAIN

(43) Veröffentlichungstag der Anmeldung: 18.08.2021
(73) Patentinhaber: Andreas Stihl AG & Co. KG, 71336 Waiblingen (DE)
(72) Erfinder: Leufen, Heinrich, 71409 Schwaikheim (DE); Bürckel, Plilippe, 71336 Waiblingen (DE); Klaiber, Simon, 71732 Tamm (DE); Haas, Alexander, 73565 Spraitbach (DE)
(74) Vertreter: Patentanwälte Ruff, Wilhelm, Beier, Dauster & Partner mbB

(56) Entgegenhaltungen:
- EP-A1- 3 311 958
- WO-A1-2011/004902
- US-A1- 2019 275 657

## Beschreibung

### ANWENDUNGSGEBIET UND STAND DER TECHNIK

Die Erfindung bezieht sich auf ein handgeführtes Garten-, Forst- und/oder Baubearbeitungsgerät und ein Verfahren zum Betreiben eines solchen handgeführten Garten-, Forst- und/oder Baubearbeitungsgeräts. Beispiele für solche Geräte sind offenbart in EP3311958 A1 und WO2011/004902 A1.

### AUFGABE UND LÖSUNG

Der Erfindung liegt als Aufgabe die Bereitstellung eines handgeführten Garten-, Forst- und/oder Baubearbeitungsgeräts und eines Verfahren zum Betreiben eines solchen handgeführten Garten-, Forst- und/oder Baubearbeitungsgeräts zugrunde, das jeweils verbesserte Eigenschaften aufweist.

Die Erfindung löst diese Aufgabe durch die Bereitstellung eines handgeführten Garten-, Forst- und/oder Baubearbeitungsgeräts mit den Merkmalen des Anspruchs 1 und/oder eines Verfahrens mit den Merkmalen des Anspruchs 14. Vorteilhafte Weiterbildungen und/oder Ausgestaltungen der Erfindung sind in den abhängigen Ansprüchen beschrieben.

Das erfindungsgemäße handgeführte Garten-, Forst- und/oder Baubearbeitungsgerät umfasst bzw. weist ein Bearbeitungswerkzeug, ein Elektromotorantriebssystem, ein benutzerverstellbares Bedienelement und eine, insbesondere elektrische, Steuereinrichtung auf. Das Elektromotorantriebssystem ist zum Antrieb des Bearbeitungswerkzeugs ausgebildet bzw. konfiguriert. Die Steuereinrichtung ist zum, insbesondere automatischen, Steuern einer, insbesondere zeitlichen, Soll-Steigungsrate, insbesondere eines Werts der Soll-Steigungsrate, bzw. einer Soll-Anstiegsrate bzw. einer Soll-Beschleunigung einer Drehzahl des Elektromotorantriebssystems in Abhängigkeit einer Stellung, insbesondere eines Werts der Stellung, des Bedienelements gemäß bzw. entsprechend mindestens einer Zuordnung derart ausgebildet bzw. konfiguriert, dass für verschiedene Stellungen, insbesondere verschiedene Werte der Stellung, insbesondere zeitliche, Maximal-Soll-Steigungsraten, insbesondere Werte der Maximal-Soll-Steigungsrate, bzw. Maximal-Soll-Anstiegsraten bzw. Maximal-Soll-Beschleunigungen der Drehzahl verschieden sind.

Dies ermöglicht, dass die Maximal-Soll-Steigungsrate durch einen Benutzer des Garten-, Forst- und/oder Baubearbeitungsgeräts durch verschiedene Einstellung des Bedienelements verschieden, insbesondere niedrig oder hoch, eingestellt werden kann. Insbesondere ermöglicht die niedrig einstellbare Maximal-Soll-Steigungsrate, ein Verdrehen, insbesondere ein Nicken, des Garten-, Forst- und/oder Baubearbeitungsgeräts, insbesondere bei einem Start des Elektromotorantriebssystems, zu begrenzen bzw. zu beschränken bzw. zu reduzieren oder sogar zu vermeiden. In anderen Worten: dies ermöglicht einen sanften Start. Somit ermöglicht dies eine niedrige oder sogar keine Belastung für den Benutzer, insbesondere ein Handgelenk des Benutzers. Somit ermöglicht dies einen hohen Komfort für den Benutzer. Zusätzlich oder alternativ ermöglicht die hoch einstellbare Maximal-Soll-Steigungsrate ein schnelles Erreichen einer Wunsch-Drehzahl.

Insbesondere kann das Garten-, Forst- und/oder Baubearbeitungsgerät ein handgetragenes Garten-, Forst- und/oder Baubearbeitungsgerät sein. Zusätzlich oder alternativ kann handgeführtes, insbesondere handgetragenes, Garten-, Forst- und/oder Baubearbeitungsgerät bedeuten, dass das Garten-, Forst- und/oder Baubearbeitungsgerät eine Masse von maximal 50 Kilogramm (kg), insbesondere von maximal 20 kg, insbesondere von maximal 10 kg, insbesondere von maximal 5 kg, und/oder von minimal 1 kg, insbesondere von minimal 2 kg, aufweisen kann.

Das Bedienelement kann mindestens drei verschiedene Stellungen aufweisen. Insbesondere kann das Bedienelement stufenlos benutzerverstellbar sein.

Die Steuereinrichtung zum Steuern kann eine Reglereinrichtung zum Regeln sein. Zusätzlich oder alternativ kann die Steuereinrichtung einen Mikrocontroller aufweisen.

Die Soll-Steigungsrate kann in einem lastfreien Zustand des Garten-, Forst- und/oder Baubearbeitungsgeräts, insbesondere des Elektromotorantriebssystems, erreicht werden.

Die Zuordnung kann als Soll-Steigungsraten-Begrenzung bzw. -Beschränkung bezeichnet werden. Zusätzlich oder alternativ kann die Zuordnung werksseitig fest eingestellt bzw. vorgegeben bzw. nicht durch den Benutzer vorgebbar sein. Weiter zusätzlich oder alternativ kann die Zuordnung den verschiedenen Stellungen die verschiedenen Maximal-Soll-Steigungsraten zuordnen.

Die verschiedenen Maximal-Soll-Steigungsraten können jeweils größer Null sein.

In einer Weiterbildung der Erfindung ist die Steuereinrichtung zum, insbesondere automatischen, Steuern einer Soll-Drehzahl, insbesondere eines Werts der Soll-Drehzahl, und der Soll-Steigungsrate der Drehzahl zur Erreichung der Soll-Drehzahl des Elektromotorantriebssystems in Abhängigkeit der Stellung gemäß der mindestens einen Zuordnung ausgebildet bzw. konfiguriert. Insbesondere kann die Soll-Drehzahl in einem lastfreien Zustand des Garten-, Forst- und/oder Baubearbeitungsgeräts, insbesondere des Elektromotorantriebssystems, erreicht werden. Zusätzlich oder alternativ kann die Zuordnung den verschiedenen Stellungen mindestens, insbesondere nur, eine, insbesondere einzige, Soll-Drehzahl, insbesondere nur einen einzigen Wert der Soll-Drehzahl, zuordnen. Zusätzlich oder alternativ kann die Soll-Drehzahl größer Null sein.

In einer Ausgestaltung der Erfindung ist die Steuereinrichtung zum Steuern der Soll-Drehzahl in Abhängigkeit der Stellung gemäß der mindestens einen Zuordnung derart ausgebildet, dass für verschiedene Stellungen, insbesondere verschiedene Werte der Stellung, Soll-Drehzahlen, insbesondere Werte der Soll-Drehzahl, verschieden sind. Dies ermöglicht, dass die Soll-Drehzahl durch den Benutzer durch verschiedene Einstellung des Bedienelements verschieden eingestellt werden kann. Insbesondere kann die Zuordnung den verschiedenen Stellungen die verschiedenen Soll-Drehzahlen zuordnen. Zusätzlich oder alternativ können die verschiedenen Soll-Drehzahlen jeweils größer Null sein.

In einer Ausgestaltung der Erfindung ist die Steuereinrichtung zum Steuern der Soll-Drehzahl gemäß der mindestens einen Zuordnung derart ausgebildet, dass eine Minimal-Soll-Drehzahl, insbesondere ein Wert der Minimal-Soll-Drehzahl, minimal 0,1-mal, insbesondere minimal 0,2-mal, insbesondere minimal 0,3-mal, einer Maximal-Soll-Drehzahl, insbesondere eines Werts der Maximal-Soll-Drehzahl, ist. Dies ermöglicht einerseits einen Antrieb des Bearbeitungswerkzeugs immer mit einer Drehzahl, mit welcher das Bearbeitungswerkzeug bestimmungsgemäß bearbeiten kann, zu gewährleisten. Andererseits ermöglicht die niedrig einstellbare Maximal-Soll-Steigungsrate, insbesondere im Unterschied zur einer hohen Maximal-Soll-Steigungsrate, dass ein Drehzahlsprung verursacht durch die Minimal-Soll-Drehzahl bei dem Start des Elektromotorantriebssystems reduziert in seiner Auswirkung reduziert werden können. Insbesondere kann die Zuordnung die Minimal-Soll-Drehzahl von minimal 0,1-mal, insbesondere minimal 0,2-mal, insbesondere minimal 0,3-mal, der Maximal-Soll-Drehzahl zuordnen. Zusätzlich oder alternativ kann die Minimal-Soll-Drehzahl gleich der Maximal-Soll-Drehzahl sein.

In einer Ausgestaltung der Erfindung ist die Steuereinrichtung zum, insbesondere automatischen, Erfassen einer Ist-Drehzahl, insbesondere eines Werts der Ist-Drehzahl, des Elektromotorantriebssystems ausgebildet bzw. konfiguriert. Des Weiteren ist die Steuereinrichtung zum, insbesondere automatischen, Ermitteln einer Drehzahl-Abweichung, insbesondere eines Werts der Drehzahl-Abweichung, insbesondere einer Drehzahl-Differenz, mittels Vergleichen der erfassten Ist-Drehzahl und der Soll-Drehzahl miteinander, insbesondere mittels Subtrahieren der Ist-Drehzahl von der Soll-Drehzahl, ausgebildet bzw. konfiguriert. Außerdem ist die Steuereinrichtung zum, insbesondere automatischen, Steuern, insbesondere gemäß der mindestens einen Zuordnung, derart ausgebildet bzw. konfiguriert, dass die Soll-Steigungsrate, insbesondere ein Wert der Soll-Steigungsrate, bei Erreichung und/oder Überschreitung eines Abweichungsgrenzwerts durch die ermittelte Drehzahl-Abweichung die Maximal-Soll-Steigungsrate, insbesondere ein Wert der Maximal-Soll-Steigungsrate, und bei Unterschreitung des Abweichungsgrenzwerts durch die ermittelte Drehzahl-Abweichung gegenüber der Maximal-Soll-Steigungsrate, insbesondere dem Wert der Maximal-Soll-Steigungsrate, niedriger ist. Dies ermöglicht die Erreichung der Soll-Drehzahl. Insbesondere kann der Abweichungsgrenzwert unabhängig von der Stellung und/oder von Null verschieden sein. Zusätzlich oder alternativ kann der Abweichungsgrenzwert gleich oder niedriger als die Minimal-Soll-Drehzahl, soweit vorhanden, sein.

In einer Ausgestaltung der Erfindung ist die Steuereinrichtung zum Steuern gemäß der mindestens einen Zuordnung derart ausgebildet, dass die Soll-Drehzahl, insbesondere ein Wert der Soll-Drehzahl, über einem Verstellbereich, insbesondere einem Verstellweg, des Bedienelements von seiner Start-Stellung bis zu seiner Maximal-Stellung von einer, insbesondere der, Minimal-Soll-Drehzahl, insbesondere einem Wert der Minimal-Soll-Drehzahl, bis zu einer, insbesondere der, Maximal-Soll-Drehzahl, insbesondere einem Wert der Maximal-Soll-Drehzahl, zunimmt bzw. ansteigt. Die Zunahme, insbesondere ein Wert der Zunahme, bzw. der Anstieg ändert sich pro minimal 0,2-mal des Verstellbereichs maximal um 20 Prozent (%) oder nicht. In anderen Worten: die Soll-Drehzahl nimmt über dem Verstellbereich von seiner Start-Stellung bis zu seiner Maximal-Stellung von der Minimal-Soll-Drehzahl bis zu der Maximal-Soll-Drehzahl linear zu. Dies ermöglicht, dass die Soll-Drehzahl durch den Benutzer fein eingestellt werden kann. Insbesondere kann die Start-Stellung von einer Minimal-Stellung bzw. einer Aus-Stellung des Bedienelements verschieden sein.

In einer Weiterbildung, insbesondere einer Ausgestaltung, der Erfindung ist die Steuereinrichtung zum Steuern gemäß der mindestens einen Zuordnung derart ausgebildet, dass für eine kleine Stellung bzw. eine Start-Stellung eine Maximal-Soll-Steigungsrate, insbesondere ein Wert der Maximal-Soll-Steigungsrate, niedrig, insbesondere minimal, ist, insbesondere und eine Soll-Drehzahl, insbesondere ein Wert der Soll-Drehzahl, niedrig, insbesondere minimal, ist, und für eine große Stellung bzw. eine Maximal-Stellung eine Maximal-Soll-Steigungsrate, insbesondere der Wert der Maximal-Soll-Steigungsrate, hoch, insbesondere maximal, ist, insbesondere und eine Soll-Drehzahl, insbesondere der Wert der Soll-Drehzahl, hoch, insbesondere maximal, ist. Dies ermöglicht, dass die Maximal-Soll-Steigungsrate, insbesondere und die Soll-Drehzahl jeweils, durch den Benutzer intuitiv eingestellt werden kann. Insbesondere kann die Zuordnung der kleinen Stellung die niedrige Maximal-Soll-Steigungsrate, insbesondere und die niedrige Soll-Drehzahl, und der großen Stellung die hohe Maximal-Soll-Steigungsrate, insbesondere und die hohe Soll-Drehzahl, zuordnen.

In einer Ausgestaltung der Erfindung erstreckt ein Übergang bzw. ein Anstieg von der niedrigen Maximal-Soll-Steigungsrate zu der hohen Maximal-Soll-Steigungsrate sich über minimal 0,1-mal, insbesondere 0,2-mal, insbesondere 0,3-mal, eines Verstellbereichs, insbesondere eines Verstellwegs, des Bedienelements. Zusätzlich oder alternativ fängt ein, insbesondere der, Übergang bzw. ein Anstieg von der niedrigen Maximal-Soll-Steigungsrate zu der hohen Maximal-Soll-Steigungsrate maximal bei einer halben, insbesondere Viertel, Maximal-Stellung des Bedienelements an. Dies, insbesondere die Erstreckung, ermöglicht, dass der Übergang sanft bzw. weich sein kann. Zusätzlich oder alternativ ermöglicht dies, insbesondere der Anfang, dass der Übergang schnell erreicht werden kann.

In einer Weiterbildung der Erfindung ist die Steuereinrichtung zum, insbesondere automatischen, Steuern einer, insbesondere zeitlichen, zweiten Soll-Steigungsrate, insbesondere eines Werts der zweiten Soll-Steigungsrate, bzw. eine zweite Soll-Anstiegsrate der Soll-Steigungsrate in Abhängigkeit der Stellung des Bedienelements gemäß der mindestens einen Zuordnung derart ausgebildet bzw. konfiguriert, dass für verschiedene Stellungen, insbesondere verschiedene Werte der Stellung, insbesondere zeitliche, zweite Maximal-Soll-Steigungsraten, insbesondere Werte der zweiten Maximal-Soll-Steigungsrate, bzw. zweite Maximal-Soll-Anstiegsraten der Soll-Steigungsrate verschieden sind. Dies ermöglicht, dass die zweite Maximal-Soll-Steigungsrate durch den Benutzer durch verschiedene Einstellung des Bedienelements verschieden, insbesondere niedrig oder hoch, eingestellt werden kann. Insbesondere ermöglicht die niedrig einstellbare zweite Maximal-Soll-Steigungsrate, einen Ruck des Garten-, Forst- und/oder Baubearbeitungsgeräts, insbesondere bei einem Start des Elektromotorantriebssystems, zu begrenzen bzw. zu beschränken bzw. zu reduzieren oder sogar zu vermeiden. In anderen Worten: dies ermöglicht einen sanften Start. Somit ermöglicht dies eine niedrige oder sogar keine Belastung für den Benutzer. Zusätzlich oder alternativ ermöglicht die hoch einstellbare zweite Maximal-Soll-Steigungsrate ein schnelles Erreichen einer Wunsch-Drehzahl. Insbesondere kann die Soll-Steigungsrate als erste zeitliche Ableitung der Drehzahl bezeichnet werden und die zweite Soll-Steigungsrate kann als zweite zeitliche Ableitung der Drehzahl bezeichnet werden. Zusätzlich oder alternativ kann die zweite Soll-Steigungsrate in einem lastfreien Zustand des Garten-, Forst- und/oder Baubearbeitungsgeräts, insbesondere des Elektromotorantriebssystems, erreicht werden. Weiter zusätzlich oder alternativ kann die Zuordnung den verschiedenen Stellungen die verschiedenen zweiten Maximal-Soll-Steigungsraten zuordnen. Weiter zusätzlich oder alternativ können die verschiedenen zweiten Maximal-Soll-Steigungsraten jeweils größer Null sein.

In einer Weiterbildung der Erfindung ist die Steuereinrichtung zum, insbesondere automatischen, Erfassen einer Verstellzeitdauer, insbesondere eines Werts der Verstellzeitdauer, und/oder einer Verstellgeschwindigkeit, insbesondere eines Werts der Verstellgeschwindigkeit, einer Verstellung des Bedienelements ausgebildet bzw. konfiguriert. Des Weiteren ist die Steuereinrichtung zum, insbesondere automatischen, Steuern bei Erreichung und/oder Überschreitung eines Zeitdauergrenzwerts durch die erfasste Verstellzeitdauer und/oder bei Erreichung und/oder Unterschreitung eines Geschwindigkeitsgrenzwerts durch die erfasste Verstellgeschwindigkeit gemäß der Zuordnung ausgebildet bzw. konfiguriert. Außerdem ist die Steuereinrichtung zum, insbesondere automatischen, Steuern bei Unterschreitung des Zeitdauergrenzwerts durch die erfasste Verstellzeitdauer und/oder bei Überschreitung des Geschwindigkeitsgrenzwerts durch die erfasste Verstellgeschwindigkeit gemäß einer weiteren Zuordnung derart ausgebildet bzw. konfiguriert, dass für mindestens eine der verschiedenen Stellungen, insbesondere mindestens der verschiedenen Werte der Stellung, eine Maximal-Soll-Steigungsrate höher als gegenüber gemäß der Zuordnung, insbesondere maximal, ist. Dies ermöglicht, dass die Zuordnung bzw. die niedrige Maximal-Soll-Steigungsrate oder die weitere Zuordnung bzw. die hohe Maximal-Soll-Steigungsrate durch den Benutzer durch verschieden schnelle Verstellung des Bedienelementes eingestellt werden kann. Insbesondere ermöglicht die hoch einstellbare Maximal-Soll-Steigungsrate ein schnelles Erreichen einer Wunsch-Drehzahl. Insbesondere kann die weitere Zuordnung der mindestens einen der verschiedenen Stellungen die gegenüber gemäß der Zuordnung höhere Maximal-Soll-Steigungsrate zuordnen. Zusätzlich oder alternativ kann das Steuern gemäß der weiteren Zuordnung, insbesondere die weitere Zuordnung, im Übrigen dem Steuern gemäß der Zuordnung, insbesondere der Zuordnung, entsprechen, insbesondere gleichen.

In einer Weiterbildung der Erfindung umfasst bzw. weist das Garten-, Forst- und/oder Baubearbeitungsgerät ein Potentiometer auf. Das Bedienelement ist zur Verstellung eines Werts einer elektrischen Größe des Potentiometers ausgebildet bzw. konfiguriert. Die Steuereinrichtung ist zum Steuern der Soll-Steigungsrate in Abhängigkeit des Werts der Größe gemäß der mindestens einen Zuordnung derart ausgebildet bzw. konfiguriert, dass für verschiedene Werte der Größe die Maximal-Soll-Steigungsraten der Drehzahl verschieden sind. Dies ermöglicht das Steuern in Abhängigkeit der Stellung. Insbesondere kann das Potentiometer einen Hall-Sensor aufweisen und/oder die Größe kann eine Hall-Spannung sein. Weiter alternativ kann die Größe ein elektrischer Widerstand sein. Weiter zusätzlich oder alternativ kann die Zuordnung den verschiedenen Werten der Größe die verschiedenen Maximal-Soll-Steigungsraten zuordnen.

In einer Weiterbildung der Erfindung ist die Steuereinrichtung zum, insbesondere automatischen, Steuern eines Drehmoments, insbesondere eines Werts des Drehmoments, erzeugt von dem Elektromotorantriebssystem zur Erreichung der Soll-Steigungsrate ausgebildet bzw. konfiguriert. Dies ermöglicht das Steuern der Soll-Steigungsrate.

In einer Weiterbildung der Erfindung ist das Garten-, Forst- und/oder Baubearbeitungsgerät eine Säge, ein Hoch-Entaster, ein Freischneider, ein Blasgerät, ein Laubbläser oder ein Trennschleifer.

Das erfindungsgemäße Verfahren ist zum Betreiben eines, insbesondere des, handgeführten Garten-, Forst- und/oder Baubearbeitungsgeräts wie zuvor beschrieben ausgebildet bzw. konfiguriert. Das Verfahren umfasst bzw. weist den Schritt auf: Steuern, insbesondere automatisches Steuern, der Soll-Steigungsrate der Drehzahl des Elektromotorantriebssystems in Abhängigkeit der Stellung des Bedienelements gemäß der mindestens einen Zuordnung derart mittels der mittels der Steuereinrichtung, dass für die verschiedene Stellungen die Maximal-Soll-Steigungsraten der Drehzahl verschieden sind.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: schematisch ein erfindungsgemäßes handgeführtes Garten-, Forst- und/oder Baubearbeitungsgerät,
- Fig. 2: schematisch eine Steuereinrichtung des Garten-, Forst- und/oder Baubearbeitungsgeräts der Fig. 1 und ein erfindungsgemäßes Verfahren zum Betreiben des Garten-, Forst- und/oder Baubearbeitungsgeräts der Fig. 1,
- Fig. 3: einen Graphen einer Maximal-Soll-Steigungsrate einer Drehzahl über einer Soll-Drehzahl eines Elektromotorantriebssystems des Garten-, Forst- und/oder Baubearbeitungsgeräts der Fig. 1 und der Soll-Drehzahl über einem Wert einer elektrischen Größe eines Potentiometers des Garten-, Forst- und/oder Baubearbeitungsgeräts der Fig. 1,
- Fig. 4: einen weiteren Graphen der Maximal-Soll-Steigungsrate über der Soll-Drehzahl,
- Fig. 5: einen nochmals weiteren Graphen der Maximal-Soll-Steigungsrate über der Soll-Drehzahl,
- Fig. 6: einen nochmals weiteren Graphen der Maximal-Soll-Steigungsrate über der Soll-Drehzahl,
- Fig. 7: einen Graphen von Maximal-Soll-Steigungsraten-Offsets über der Soll-Drehzahl,
- Fig. 8: einen Graphen einer zweiten Maximal-Soll-Steigungsrate einer Soll-Steigungsrate über der Soll-Drehzahl, und
- Fig. 9: einen Graphen von zweiten Maximal-Soll-Steigungsraten-Offsets über der Soll-Drehzahl.

### DETAILLIERTE BESCHREIBUNG DER AUSFÜHRUNGSBEISPIELE

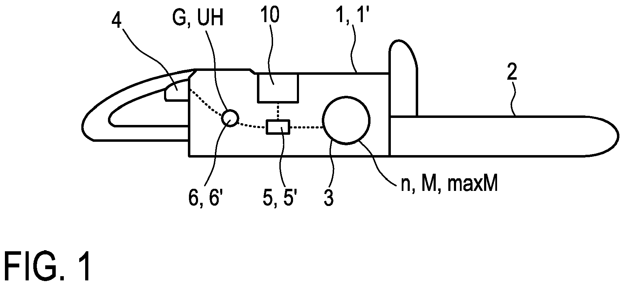

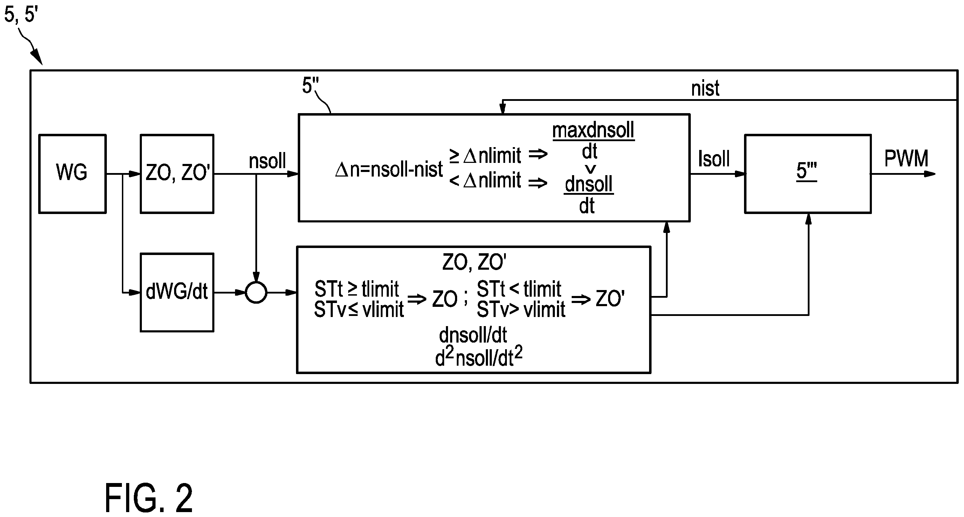

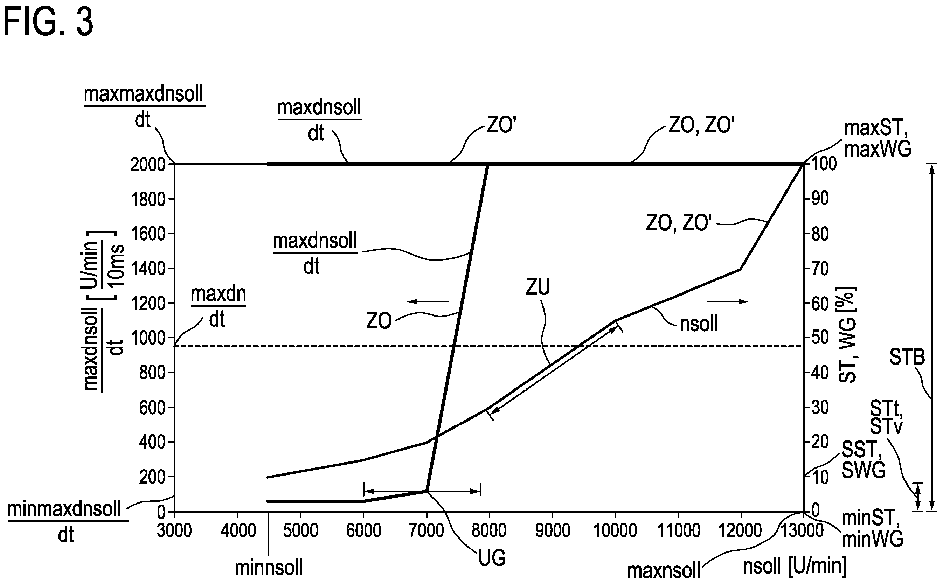

Fig. 1 zeigt ein erfindungsgemäßes handgeführtes Garten-, Forst- und/oder Baubearbeitungsgerät 1. Das Garten-, Forst- und/oder Baubearbeitungsgerät 1 weist ein Bearbeitungswerkzeug 2, ein Elektromotorantriebssystem 3, ein benutzerverstellbares Bedienelement 4 und eine Steuereinrichtung 5 auf. Das Elektromotorantriebssystem 3 ist zum Antrieb des Bearbeitungswerkzeugs 2 ausgebildet, insbesondere treibt an. Die Steuereinrichtung 5 ist zum Steuern einer Soll-Steigungsrate dnsoll/dt einer Drehzahl n des Elektromotorantriebssystems 3 in Abhängigkeit einer Stellung des Bedienelements 4 gemäß mindestens einer Zuordnung ZO derart ausgebildet, insbesondere steuert, wie in Fig. 2 gezeigt, dass für verschiedene Stellungen ST Maximal-Soll-Steigungsraten maxdnsoll/dt der Drehzahl n verschieden sind, wie in Fig. 3 bis 6 gezeigt.

Fig. 2 zeigt ein erfindungsgemäßes Verfahren zum Betreiben des handgeführten Garten-, Forst- und/oder Baubearbeitungsgeräts 1. Das Verfahren weist den Schritt auf: Steuern der Soll-Steigungsrate dnsoll/dt der Drehzahl n des Elektromotorantriebssystems 3 in Abhängigkeit der Stellung ST des Bedienelements 4 gemäß der mindestens einen Zuordnung ZO derart mittels der mittels der Steuereinrichtung 5, dass für die verschiedene Stellungen ST die Maximal-Soll-Steigungsraten maxdnsoll/dt der Drehzahl n verschieden sind.

In dem gezeigten Ausführungsbeispiel ist das Garten-, Forst- und/oder Baubearbeitungsgerät 1 eine Säge 1'. In alternativen Ausführungsbeispielen kann das Garten-, Forst- und/oder Baubearbeitungsgerät ein Hoch-Entaster, ein Freischneider, ein Blasgerät, ein Laubbläser oder ein Trennschleifer sein.

Des Weiteren ist die Steuereinrichtung 1 zum Steuern eines Drehmoments M erzeugt von dem Elektromotorantriebssystem 3 zur Erreichung der Soll-Steigungsrate dnsoll/dt ausgebildet, insbesondere steuert.

Außerdem weist in dem gezeigten Ausführungsbeispiel das Garten-, Forst- und/oder Baubearbeitungsgerät 1 ein Potentiometer 6 auf. Das Bedienelement 4 ist zur Verstellung eines Werts WG einer elektrischen Größe G des Potentiometers 6 ausgebildet, insbesondere verstellt. Die Steuereinrichtung 5 ist zum Steuern der Soll-Steigungsrate dnsoll/dt in Abhängigkeit des Werts WG der Größe G gemäß der mindestens einen Zuordnung ZO derart ausgebildet, insbesondere steuert, dass für verschiedene Werte WG der Größe G die Maximal-Soll-Steigungsraten maxdnsoll/dt der Drehzahl n verschieden sind.

In alternativen Ausführungsbeispielen kann das Garten-, Forst- und/oder Baubearbeitungsgerät mindestens zwei Schalter aufweisen, wobei das Bedienelement zur Verstellung der Schalter ausgebildet sein kann, wobei die Steuereinrichtung zum Steuern der Soll-Steigungsrate dnsoll/dt in Abhängigkeit einer jeweiligen Schalter-Stellung der Schalter gemäß der mindestens einen Zuordnung derart ausgebildet sein kann, dass für verschiedene Schalter-Stellungen die Maximal-Soll-Steigungsraten der Drehzahl verschieden sein können.

Insbesondere weist in dem gezeigten Ausführungsbeispiel das Potentiometer 6 einen Hall-Sensor 6' auf und die Größe G ist eine Hall-Spannung UH.

Weiter ist die Steuereinrichtung 5 zum Erfassen einer Verstellzeitdauer STt und/oder einer Verstellgeschwindigkeit STv einer Verstellung des Bedienelements 4, insbesondere des Werts WG der Größe G, ausgebildet, insbesondere erfasst. Zudem ist die Steuereinrichtung 5 zum Steuern bei Erreichung und/oder Überschreitung eines Zeitdauergrenzwerts tlimit durch die erfasste Verstellzeitdauer STt und/oder bei Erreichung und/oder Unterschreitung eines Geschwindigkeitsgrenzwerts vlimit durch die erfasste Verstellgeschwindigkeit STv gemäß der Zuordnung ZO ausgebildet, insbesondere steuert. Des Weiteren ist die Steuereinrichtung 5 zum Steuern bei Unterschreitung des Zeitdauergrenzwerts tlimit durch die erfasste Verstellzeitdauer STt und/oder bei Überschreitung des Geschwindigkeitsgrenzwerts vlimit durch die erfasste Verstellgeschwindigkeit STv gemäß einer weiteren Zuordnung ZO' derart ausgebildet, insbesondere steuert, dass für mindestens eine der verschiedenen Stellungen ST eine Maximal-Soll-Steigungsrate maxdnsoll/dt höher als gegenüber gemäß der Zuordnung ZO, insbesondere maximal, ist, wie in Fig. 3 gezeigt.

In dem gezeigten Ausführungsbeispiel ist für eine kleine Stellung SST, insbesondere einen kleinen Wert SWG der Größe G, die Maximal-Soll-Steigungsrate maxdnsoll/dt höher als gegenüber gemäß der Zuordnung ZO. Für eine große Stellung maxST, insbesondere einen großen Wert maxWG der Größe G, ist die Maximal-Soll-Steigungsrate maxdnsoll/dt gleich gemäß der Zuordnung ZO, insbesondere maximal.

Im Übrigen gleicht die weitere Zuordnung ZO' der Zuordnung ZO.

Insbesondere kann die weitere Zuordnung ZO' die Zuordnung ZO plus ein, insbesondere stellungsabhängiger, Offset, insbesondere ein Maximal-Soll-Steigungsraten-Offset, sein.

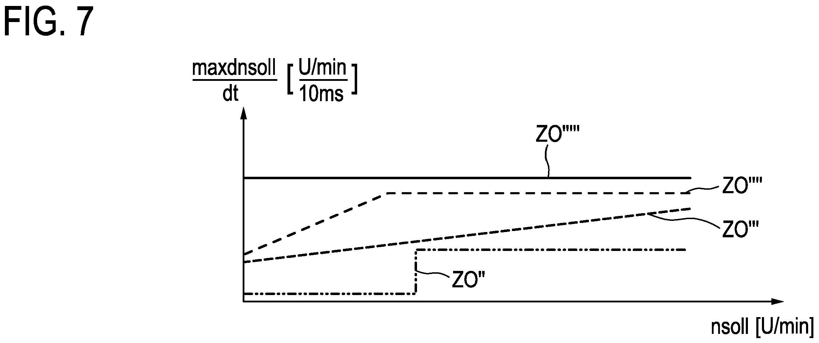

Weitere mögliche Offsets ZO", ZO‴, ZO"", ZO‴ʺ zeigen Fig. 7.

Außerdem ist die Steuereinrichtung 5 zum Steuern einer Soll-Drehzahl nsoll und der Soll-Steigungsrate dnsoll/dt der Drehzahl n zur Erreichung der Soll-Drehzahl nsoll des Elektromotorantriebssystems 3 in Abhängigkeit der Stellung ST, insbesondere des Werts WG, gemäß der mindestens einen Zuordnung ZO, insbesondere oder der weiteren Zuordnung ZO', ausgebildet, insbesondere steuert.

Im Detail ist die Steuereinrichtung 5 zum Steuern der Soll-Drehzahl nsoll in Abhängigkeit der Stellung ST, insbesondere des Werts WG, gemäß der mindestens einen Zuordnung ZO, insbesondere oder der weiteren Zuordnung ZO', derart ausgebildet, insbesondere steuert, dass für verschiedene Stellungen ST, insbesondere verschiedene Werte WG der Größe G, Soll-Drehzahlen nsoll verschieden sind.

Weiter ist die Steuereinrichtung 5 zum Steuern der Soll-Drehzahl nsoll gemäß der mindestens einen Zuordnung ZO, insbesondere oder der weiteren Zuordnung ZO', derart ausgebildet, insbesondere steuert, dass eine Minimal-Soll-Drehzahl minnsoll minimal 0,1-mal einer Maximal-Soll-Drehzahl maxnsoll ist.

In dem gezeigten Ausführungsbeispiel ist die Minimal-Soll-Drehzahl minnsoll 4500 Umdrehungen pro Minute (U/min). Zusätzlich ist die Maximal-Soll-Drehzahl maxnsoll 13000 U/min.

Zudem ist die Steuereinrichtung 5 zum Erfassen einer Ist-Drehzahl nist des Elektromotorantriebssystems 3 ausgebildet, insbesondere erfasst. Des Weiteren ist die Steuereinrichtung 5 zum Ermitteln einer Drehzahl-Abweichung Δn mittels Vergleichen der erfassten Ist-Drehzahl nist und der Soll-Drehzahl nsoll miteinander ausgebildet, insbesondere ermittelt. Außerdem ist die Steuereinrichtung 5 zum Steuern, insbesondere gemäß der mindestens einen Zuordnung ZO, insbesondere oder der weitere Zuordnung ZO', derart ausgebildet, insbesondere steuert, dass die Soll-Steigungsrate dnsoll/dt bei Erreichung und/oder Überschreitung eines Abweichungsgrenzwerts Δnlimit durch die ermittelte Drehzahl-Abweichung Δn die Maximal-Soll-Steigungsrate maxdnsoll/dt und bei Unterschreitung des Abweichungsgrenzwerts Δnlimit durch die ermittelte Drehzahl-Abweichung Δn gegenüber der Maximal-Soll-Steigungsrate maxdnsoll/dt niedriger ist.

Insbesondere ist die Steuereinrichtung 5 zum Steuern eine Reglereinrichtung 5' zum Regeln.

In dem gezeigten Ausführungsbeispiel weist die Reglereinrichtung 5' einen Drehzahlregler 5" und eine Stromregler 5‴ auf.

Weiter ist der Abweichungsgrenzwert Δnlimit gleich oder niedriger als die Minimal-Soll-Drehzahl minnsoll.

Zudem ist die Steuereinrichtung 5 zum Steuern gemäß der mindestens einen Zuordnung ZO, insbesondere oder der weiteren Zuordnung ZO', derart ausgebildet, insbesondere steuert, dass die Soll-Drehzahl nsoll über einem Verstellbereich STB des Bedienelements 4, insbesondere des Werts WG, von seiner Start-Stellung SST, insbesondere einem Start-Wert SWG der Größe G, bis zu seiner Maximal-Stellung maxST, insbesondere einem Maximal-Wert maxWG der Größe G, von der Minimal-Soll-Drehzahl minnsoll bis zu der Maximal-Soll-Drehzahl maxnsoll zunimmt. Die Zunahme ZU ändert sich pro minimal 0,2-mal des Verstellbereichs STB maximal um 20 % oder nicht.

In dem gezeigten Ausführungsbeispiel ist die Start-Stellung SST, insbesondere der Start-Wert, SWG, von einer Minimal-Stellung minST des Bedienelements 4, insbesondere einem Minimal-Wert minWG der Größe G, verschieden.

Insbesondere ist die Start-Stellung SST, insbesondere der Start-Wert SWG, 10 %. Zusätzlich ist die Maximal-Stellung maxST, insbesondere der Maximal-Wert maxWG, 100 %. Weiter zusätzlich ist die Minimal-Stellung minST, insbesondere der Minimal-Wert minWG, 0 %.

Des Weiteren ist die Steuereinrichtung 5 zum Steuern gemäß der mindestens einen Zuordnung ZO derart ausgebildet, insbesondere steuert, dass für die kleine Stellung bzw. die Start-Stellung SST, insbesondere den kleinen Wert bzw. den Start-Wert SWG, eine Maximal-Soll-Steigungsrate maxdnsoll/dt niedrig, insbesondere minimal bzw. eine minimale Maximal-Soll-Steigungsrate minmaxdnsoll/dt, ist und für die große Stellung bzw. die Maximal-Stellung maxST, insbesondere den großen Wert bzw. den Maximal-Wert maxWG, eine Maximal-Soll-Steigungsrate maxdnsoll/dt hoch, insbesondere maximal bzw. eine maximale Maximal-Soll-Steigungsrate maxmaxdnsoll/dt, ist.

In dem gezeigten Ausführungsbeispiel ist die minimale Maximal-Soll-Steigungsrate minmaxdnsoll/dt 50 U/min pro 10 Millisekunden (ms). Zusätzlich ist die maximale Maximal-Soll-Steigungsrate maxmaxdnsoll/dt 2000 U/min pro 10 ms.

Insbesondere ist die maximale Maximal-Soll-Steigungsrate maxmaxdnsoll/dt höher als eine maximal erreichbare Steigungsrate maxdn/t der Drehzahl n, in dem gezeigten Ausführungsbeispiel von 950 U/min pro 10 ms. Die maximal erreichbare Steigungsrate maxdn/dt ist durch ein maximal erreichbares Drehmoment maxM erzeugt von dem Elektromotorantriebssystem 3 begrenzt.

Außerdem ist die Steuereinrichtung 5 zum Steuern gemäß der mindestens einen Zuordnung ZO, insbesondere oder der weiteren Zuordnung ZO', derart ausgebildet, insbesondere steuert, dass für die kleine Stellung bzw. die Start-Stellung SST, insbesondere den kleinen Wert bzw. den Start-Wert SWG, eine Soll-Drehzahl nsoll niedrig, insbesondere minimal bzw. die Minimal-Soll-Drehzahl minnsoll, ist und für die große Stellung bzw. die Maximal-Stellung maxST, insbesondere den großen Wert bzw. den Maximal-Wert maxWG, eine Soll-Drehzahl nsoll hoch, insbesondere maximal bzw. die Maximal-Soll-Drehzahl maxnsoll, ist.

Weiter erstreckt ein Übergang UG von der niedrigen bzw. minimalen Maximal-Soll-Steigungsrate minmaxdnsoll/dt zu der hohen bzw. maximalen Maximal-Soll-Steigungsrate maxmaxdnsoll/dt sich über minimal 0,1-mal des Verstellbereichs STB des Bedienelements 4, insbesondere des Werts WG, wie in Fig. 3, 5 und 6 gezeigt.

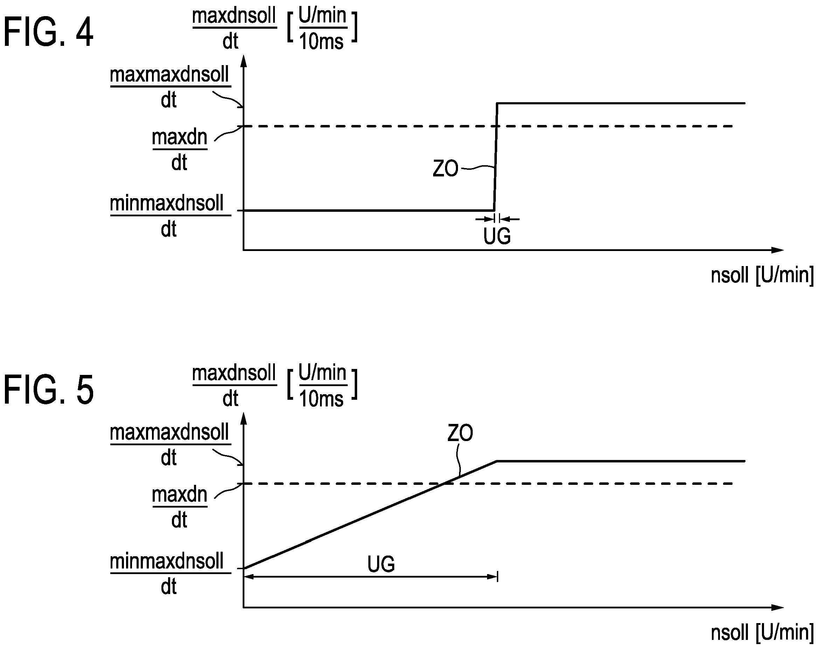

Ein alternativer, insbesondere harter, Übergang UG ist in Fig. 4 gezeigt.

Zusätzlich fängt der Übergang UG von der niedrigen bzw. minimalen Maximal-Soll-Steigungsrate minmaxdnsoll/dt zu der hohen bzw. maximalen Maximal-Soll-Steigungsrate maxmaxdnsoll/dt maximal bei der halben Maximal-Stellung maxST des Bedienelements 4, insbesondere bei dem halben Maximal-Wert maxWG, an, wie in Fig. 3, 5 und 6 gezeigt.

Insbesondere ist der in Fig. 3 gezeigte Übergang UG wirksam in einem weiten Bereich und sanft zwischen schwacher und starker Beschleunigung, aber verliert Zeit bei Beschleunigung auf eine hohe Drehzahl, da Zeit für Verstellung benötigt wird.

Der in Fig. 4 gezeigte Übergang UG ist wirksam in weitem Bereich, aber verliert Zeit bei Beschleunigung auf eine hohe Drehzahl, da Zeit für Verstellung benötigt wird und ist hart.

Der in Fig. 5 gezeigte Übergang ermöglicht eine schnelle Beschleunigung und ist sanft zu hoher Beschleunigung, aber erfordert eine sensible Verstellung um Effekt zu erreichen.

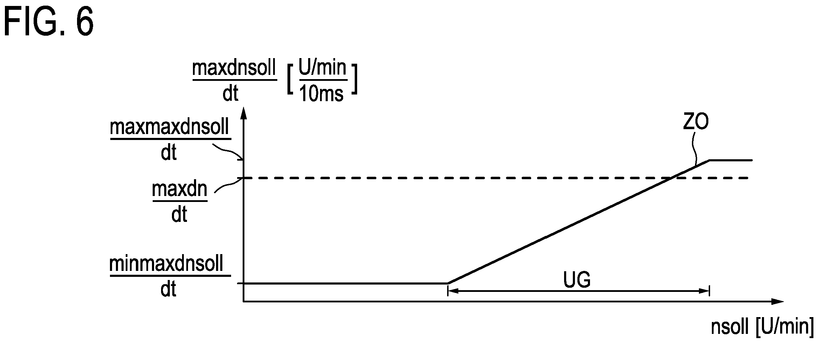

Der in Fig. 6 gezeigte Übergang ist wirksam in weitem Bereich und sehr sanft zwischen schwacher und starker Beschleunigung, aber die schwache Beschleunigung ist langsam.

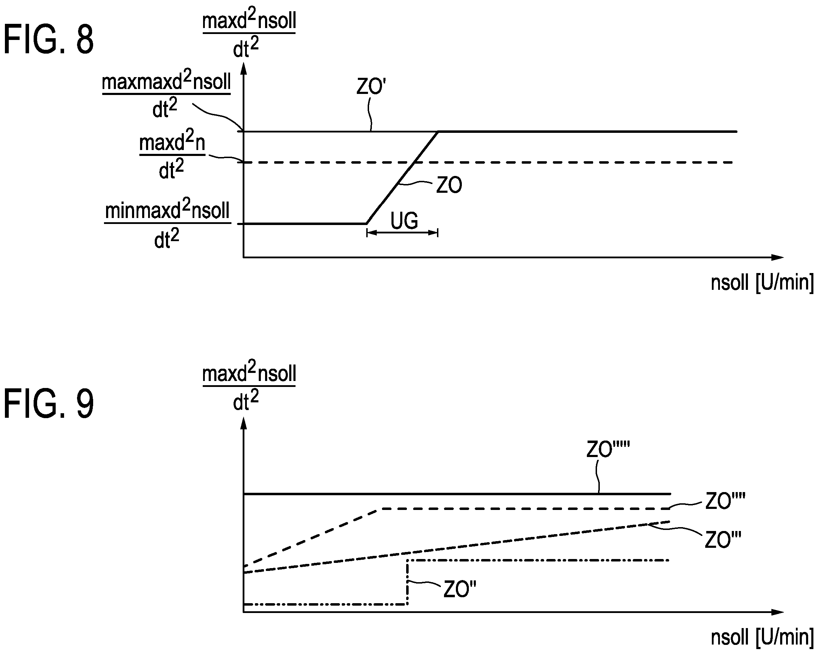

Zudem ist die Steuereinrichtung 5 zum Steuern einer zweiten Soll-Steigungsrate d²nsoll/dt² der Soll-Steigungsrate dnsoll/dt in Abhängigkeit der Stellung ST des Bedienelements 4, insbesondere des Werts WG, gemäß der mindestens einen Zuordnung ZO derart ausgebildet, insbesondere steuert, dass für verschiedene Stellungen ST, insbesondere verschiedene Werte WG, zweite Maximal-Soll-Steigungsraten maxd²nsoll/dt² der Soll-Steigungsrate dnsoll/dt verschieden sind, wie in Fig. 8 gezeigt.

Insbesondere ist die Steuereinrichtung 5 zum Steuern gemäß der mindestens einen Zuordnung ZO derart ausgebildet, insbesondere steuert, dass für die kleine Stellung bzw. die Start-Stellung SST, insbesondere den kleinen Wert bzw. den Start-Wert SWG, eine zweite Soll-Steigungsrate d²nsoll/dt² niedrig, insbesondere minimal bzw. eine minimale zweite Soll-Steigungsrate mind²nsoll/dt², ist und für die große Stellung bzw. die Maximal-Stellung maxST, insbesondere den großen Wert bzw. den Maximal-Wert maxWG, eine zweite Soll-Steigungsrate d²nsoll/dt² hoch, insbesondere maximal bzw. eine maximale zweite Soll-Steigungsrate maxd²nsoll/dt², ist.

Zusätzlich oder alternativ kann die weitere Zuordnung ZO' die Zuordnung ZO plus ein, insbesondere stellungsabhängiger, Offset, insbesondere ein zweiter Maximal-Soll-Steigungsraten-Offset, sein.

Weitere mögliche Offsets ZO", ZO‴, ZO"", ZO‴ʺ zeigt Fig. 9.

In dem gezeigten Ausführungsbeispiel ist das Garten-, Forst- und/oder Baubearbeitungsgerät 1 zum elektrischen Verbinden mit einem Akkumulator 10 ausgebildet, insbesondere elektrisch verbunden. In alternativen Ausführungsbeispielen kann das Garten-, Forst- und/oder Baubearbeitungsgerät zusätzlich oder alternativ zum elektrischen Verbinden mit einem Kabel ausgebildet sein.

Wie die gezeigten und oben erläuterten Ausführungsbeispiele deutlich machen, stellt die Erfindung ein vorteilhaftes handgeführtes Garten-, Forst- und/oder Baubearbeitungsgerät und ein Verfahren zum Betreiben eines solchen handgeführten Garten-, Forst- und/oder Baubearbeitungsgeräts bereit, das jeweils verbesserte Eigenschaften aufweist.

## Patentansprüche

1. Handgeführtes Garten-, Forst- und/oder Baubearbeitungsgerät (1), wobei das Garten-, Forst- und/oder Baubearbeitungsgerät (1) aufweist:
- ein Bearbeitungswerkzeug (2),
- ein Elektromotorantriebssystem (3), wobei das Elektromotorantriebssystem (3) zum Antrieb des Bearbeitungswerkzeugs (2) ausgebildet ist,
- ein benutzerverstellbares Bedienelement (4), und
- eine Steuereinrichtung (5), **dadurch gekennzeichnet, dass** die Steuereinrichtung (5) zum Steuern einer Soll-Steigungsrate (dnsoll/dt) einer Drehzahl (n) des Elektromotorantriebssystems (3) in Abhängigkeit einer Stellung (ST) des Bedienelements (4) gemäß mindestens einer Zuordnung (ZO) derart ausgebildet ist, dass für verschiedene Stellungen (ST) Maximal-Soll-Steigungsraten (maxdnsoll/dt) der Drehzahl (n) verschieden sind.

2. Handgeführtes Garten-, Forst- und/oder Baubearbeitungsgerät (1) nach Anspruch 1,
- wobei die Steuereinrichtung (5) zum Steuern einer Soll-Drehzahl (nsoll) und der Soll-Steigungsrate (dnsoll/dt) der Drehzahl (n) zur Erreichung der Soll-Drehzahl (nsoll) des Elektromotorantriebssystems (3) in Abhängigkeit der Stellung (ST) gemäß der mindestens einen Zuordnung (ZO) ausgebildet ist.

3. Handgeführtes Garten-, Forst- und/oder Baubearbeitungsgerät (1) nach Anspruch 2,
- wobei die Steuereinrichtung (5) zum Steuern der Soll-Drehzahl (nsoll) in Abhängigkeit der Stellung (ST) gemäß der mindestens einen Zuordnung (ZO) derart ausgebildet ist, dass für verschiedene Stellungen (ST) Soll-Drehzahlen (nsoll) verschieden sind.

4. Handgeführtes Garten-, Forst- und/oder Baubearbeitungsgerät (1) nach Anspruch 2 oder 3,
- wobei die Steuereinrichtung (5) zum Steuern der Soll-Drehzahl (nsoll) gemäß der mindestens einen Zuordnung (ZO) derart ausgebildet ist, dass eine Minimal-Soll-Drehzahl (minnsoll) minimal 0,1-mal, insbesondere minimal 0,2-mal, insbesondere minimal 0,3-mal, einer Maximal-Soll-Drehzahl (maxnsoll) ist.

5. Handgeführtes Garten-, Forst- und/oder Baubearbeitungsgerät (1) nach einem der Ansprüche 2 bis 4,
- wobei die Steuereinrichtung (5) zum Erfassen einer Ist-Drehzahl (nist) des Elektromotorantriebssystems (3), zum Ermitteln einer Drehzahl-Abweichung (Δn) mittels Vergleichen der erfassten Ist-Drehzahl (nist) und der Soll-Drehzahl (nsoll) miteinander und zum Steuern, insbesondere gemäß der mindestens einen Zuordnung (ZO), derart ausgebildet ist, dass die Soll-Steigungsrate (dnsoll/dt) bei Erreichung und/oder Überschreitung eines Abweichungsgrenzwerts (Δnlimit) durch die ermittelte Drehzahl-Abweichung (Δn) die Maximal-Soll-Steigungsrate (maxdnsoll/dt) und bei Unterschreitung des Abweichungsgrenzwerts (Δnlimit) durch die ermittelte Drehzahl-Abweichung (Δn) gegenüber der Maximal-Soll-Steigungsrate (maxdnsoll/dt) niedriger ist.

6. Handgeführtes Garten-, Forst- und/oder Baubearbeitungsgerät (1) nach einem der Ansprüche 2 bis 5,
- wobei die Steuereinrichtung (5) zum Steuern gemäß der mindestens einen Zuordnung (ZO) derart ausgebildet ist, dass die Soll-Drehzahl (nsoll) über einem Verstellbereich (STB) des Bedienelements (4) von seiner Start-Stellung (SST) bis zu seiner Maximal-Stellung (maxST) von einer Minimal-Soll-Drehzahl (minnsoll) bis zu einer Maximal-Soll-Drehzahl (maxnsoll) zunimmt, wobei die Zunahme (ZU) sich pro minimal 0,2-mal des Verstellbereichs (STB) maximal um 20 % ändert oder nicht ändert.

7. Handgeführtes Garten-, Forst- und/oder Baubearbeitungsgerät (1) nach einem der vorhergehenden Ansprüche, insbesondere nach einem der Ansprüche 2 bis 6,
- wobei die Steuereinrichtung (5) zum Steuern gemäß der mindestens einen Zuordnung (ZO) derart ausgebildet ist, dass für eine kleine Stellung (SST) eine Maximal-Soll-Steigungsrate (maxdnsoll/dt) niedrig ist, insbesondere und eine Soll-Drehzahl (nsoll) niedrig ist, und für eine große Stellung (maxST) eine Maximal-Soll-Steigungsrate (maxdnsoll/dt) hoch ist, insbesondere und eine Soll-Drehzahl (nsoll) hoch ist.

8. Handgeführtes Garten-, Forst- und/oder Baubearbeitungsgerät (1) nach Anspruch 7,
- wobei ein Übergang (UG) von der niedrigen Maximal-Soll-Steigungsrate (minmaxdnsoll/dt) zu der hohen Maximal-Soll-Steigungsrate (maxmaxdnsoll/dt) sich über minimal 0,1-mal, insbesondere 0,2-mal, insbesondere 0,3-mal, eines Verstellbereichs (STB) des Bedienelements (4) erstreckt, und/oder
- wobei ein Übergang (UG) von der niedrigen Maximal-Soll-Steigungsrate (minmaxdnsoll/dt) zu der hohen Maximal-Soll-Steigungsrate (maxmaxdnsoll/dt) maximal bei einer halben, insbesondere Viertel, Maximal-Stellung (maxST) des Bedienelements (4) anfängt.

9. Handgeführtes Garten-, Forst- und/oder Baubearbeitungsgerät (1) nach einem der vorhergehenden Ansprüche,
- wobei die Steuereinrichtung (5) zum Steuern einer zweiten Soll-Steigungsrate (d²nsoll/dt²) der Soll-Steigungsrate (dnsoll/dt) in Abhängigkeit der Stellung (ST) des Bedienelements (4) gemäß der mindestens einen Zuordnung (ZO) derart ausgebildet ist, dass für verschiedene Stellungen (ST) zweite Maximal-Soll-Steigungsraten (maxd²nsoll/dt²) der Soll-Steigungsrate (dnsoll/dt) verschieden sind.

10. Handgeführtes Garten-, Forst- und/oder Baubearbeitungsgerät (1) nach einem der vorhergehenden Ansprüche,
- wobei die Steuereinrichtung (5) zum Erfassen einer Verstellzeitdauer (STt) und/oder einer Verstellgeschwindigkeit (STv) einer Verstellung des Bedienelements (4), und
- zum Steuern bei Erreichung und/oder Überschreitung eines Zeitdauergrenzwerts (tlimit) durch die erfasste Verstellzeitdauer (STt) und/oder bei Erreichung und/oder Unterschreitung eines Geschwindigkeitsgrenzwerts (vlimit) durch die erfasste Verstellgeschwindigkeit (STv) gemäß der Zuordnung (ZO), und
- zum Steuern bei Unterschreitung des Zeitdauergrenzwerts (tlimit) durch die erfasste Verstellzeitdauer (STt) und/oder bei Überschreitung des Geschwindigkeitsgrenzwerts (vlimit) durch die erfasste Verstellgeschwindigkeit (STv) gemäß einer weiteren Zuordnung (ZO') derart ausgebildet ist, dass für mindestens eine der verschiedenen Stellungen (ST) eine Maximal-Soll-Steigungsrate (maxdnsoll/dt) höher als gegenüber gemäß der Zuordnung (ZO), insbesondere maximal, ist.

11. Handgeführtes Garten-, Forst- und/oder Baubearbeitungsgerät (1) nach einem der vorhergehenden Ansprüche,
- wobei das Garten-, Forst- und/oder Baubearbeitungsgerät (1) ein Potentiometer (6) aufweist,
- wobei das Bedienelement (4) zur Verstellung eines Werts (WG) einer elektrischen Größe (G) des Potentiometers (6) ausgebildet ist, und
- wobei die Steuereinrichtung (5) zum Steuern der Soll-Steigungsrate (dnsoll/dt) in Abhängigkeit des Werts (WG) der Größe (G) gemäß der mindestens einen Zuordnung (ZO) derart ausgebildet ist, dass für verschiedene Werte (WG) der Größe (G) die Maximal-Soll-Steigungsraten (maxdnsoll/dt) der Drehzahl (n) verschieden sind.

12. Handgeführtes Garten-, Forst- und/oder Baubearbeitungsgerät (1) nach einem der vorhergehenden Ansprüche,
- wobei die Steuereinrichtung (5) zum Steuern eines Drehmoments (M) erzeugt von dem Elektromotorantriebssystem (3) zur Erreichung der Soll-Steigungsrate (dnsoll/dt) ausgebildet ist.

13. Handgeführtes Garten-, Forst- und/oder Baubearbeitungsgerät (1) nach einem der vorhergehenden Ansprüche,
- wobei das Garten-, Forst- und/oder Baubearbeitungsgerät (1) eine Säge (1'), ein Hoch-Entaster, ein Freischneider, ein Blasgerät, ein Laubbläser oder ein Trennschleifer ist.

14. Verfahren zum Betreiben eines handgeführten Garten-, Forst- und/oder Baubearbeitungsgeräts (1) nach einem der vorhergehenden Ansprüche, wobei das Verfahren den Schritt aufweist:
- Steuern der Soll-Steigungsrate (dnsoll/dt) der Drehzahl (n) des Elektromotorantriebssystems (3) in Abhängigkeit der Stellung (ST) des Bedienelements (4) gemäß der mindestens einen Zuordnung (ZO) derart mittels der Steuereinrichtung (5), dass für die verschiedene Stellungen (ST) die Maximal-Soll-Steigungsraten (maxdnsoll/dt) der Drehzahl (n) verschieden sind.

## Claims

1. Hand-guided gardening, forestry and/or construction processing device (1), wherein the gardening, forestry and/or construction processing device (1) has:
- a processing tool (2),
- an electric motor drive system (3), wherein the electric motor drive system (3) is designed to drive the processing tool (2),
- a user-adjustable operating element (4), and
- a control device (5),
**characterised in that**
the control device (5) is designed to control a target slope rate (dnsoll/dt) of a rotational speed (n) of the electric motor drive system (3) in dependence on a position (ST) of the operating element (4) according to at least one allocation (ZO) in such a way that maximum target slope rates (maxdnsoll/dt) of the rotational speed (n) differ for different positions (ST).

2. Hand-guided gardening, forestry and/or construction processing device (1) according to Claim 1,
- wherein the control device (5) is designed to control a target rotational speed (nsoll) and the target slope rate (dnsoll/dt) of the rotational speed (n) in order to achieve the target rotational speed (nsoll) of the electric motor drive system (3) in dependence on the position (ST) according to the at least one allocation (ZO).

3. Hand-guided gardening, forestry and/or construction processing device (1) according to Claim 2,
- wherein the control device (5) is designed to control the target rotational speed (nsoll) in dependence on the position (ST) according to the at least one allocation (ZO) in such a way that target rotational speeds (nsoll) differ for different positions (ST).

4. Hand-guided gardening, forestry and/or construction processing device (1) according to Claim 2 or 3,
- wherein the control device (5) is designed to control the target rotational speed (nsoll) according to the at least one allocation (ZO) in such a way that a minimum target rotational speed (minnsoll) is at least 0.1 times, in particular at least 0.2 times, in particular at least 0.3 times, a maximum target rotational speed (maxnsoll).

5. Hand-guided gardening, forestry and/or construction processing device (1) according to any of Claims 2 to 4,
- wherein the control device (5) is designed to detect an actual rotational speed (nist) of the electric motor drive system (3), to determine a rotational speed deviation (Δn) by comparing the detected actual rotational speed (nist) and the target rotational speed (nsoll) with one another, and to control, in particular according to the at least one allocation (ZO), in such a way that the target slope rate (dnsoll/dt) is the maximum target slope rate (maxdnsoll/dt) when a deviation limit value (Δnlimit) is reached and/or exceeded by the rotational speed deviation (Δn) determined, and is lower than the maximum target slope rate (maxdnsoll/dt) when the deviation limit value (Δnlimit) is undershot by the rotational speed deviation (Δn) determined.

6. Hand-guided gardening, forestry and/or construction processing device (1) according to any of Claims 2 to 5,
- wherein the control device (5) is designed to control according to the at least one allocation (ZO) in such a way that the target rotational speed (nsoll) increases over an adjustment range (STB) of the operating element (4) from its starting position (SST) to its maximum position (maxST) from a minimum target rotational speed (minnsoll) to a maximum target rotational speed (maxnsoll), wherein the increase (ZU) changes by at most 20% at least every 0.2 times the adjustment range (STB), or does not change.

7. Hand-guided gardening, forestry and/or construction processing device (1) according to any of the preceding claims, in particular according to any of Claims 2 to 6,
- wherein the control device (5) is designed to control according to the at least one allocation (ZO) in such a way that, for a low position (SST), a maximum target slope rate (maxdnsoll/dt) is low, in particular and a target rotational speed (nsoll) is low, and, for a high position (maxST), a maximum target slope rate (maxdnsoll/dt) is high, in particular and a target rotational speed (nsoll) is high.

8. Hand-guided gardening, forestry and/or construction processing device (1) according to Claim 7,
- wherein a transition (UG) from the low maximum target slope rate (minmaxdnsoll/dt) to the high maximum target slope rate (maxmaxdnsoll/dt) extends over at least 0.1 times, in particular 0.2 times, in particular 0.3 times, an adjustment range (STB) of the operating element (4), and/or
- wherein a transition (UG) from the low maximum target slope rate (minmaxdnsoll/dt) to the high maximum target slope rate (maxmaxdnsoll/dt) begins at most at half, in particular at a quarter, of the maximum position (maxST) of the operating element (4) .

9. Hand-guided gardening, forestry and/or construction processing device (1) according to any of the preceding claims,
- wherein the control device (5) is designed to control a second target slope rate (d²nsoll/dt²) of the target slope rate (dnsoll/dt) in dependence on the position (ST) of the operating element (4) according to the at least one allocation (ZO) in such a way that second maximum target slope rates (maxd²nsoll/dt²) of the target slope rate (dnsoll/dt) differ for different positions (ST).

10. Hand-guided gardening, forestry and/or construction processing device (1) according to any of the preceding claims,
- wherein the control device (5) is designed to detect an adjustment duration (STt) and/or an adjustment speed (STv) of an adjustment of the operating element (4), and
- to control according to the allocation (ZO) when a duration limit value (tlimit) is reached and/or exceeded by the adjustment duration (STt) detected and/or when a speed limit value (vlimit) is reached and/or undershot by the adjustment speed (STv) detected, and
- to control according to a further allocation (ZO') when the duration limit value (tlimit) is undershot by the adjustment duration (STt) detected and/or when the speed limit value (vlimit) is exceeded by the adjustment speed (STv) detected, in such a way that a maximum target slope rate (maxdnsoll/dt) is higher for at least one of the different positions (ST) than it would be according to the allocation (ZO), in particular is maximal.

11. Hand-guided gardening, forestry and/or construction processing device (1) according to any of the preceding claims,
- wherein the gardening, forestry and/or construction processing device (1) has a potentiometer (6),
- wherein the operating element (4) is designed to adjust a value (WG) of an electric variable (G) of the potentiometer (6), and
- wherein the control device (5) is designed to control the target slope rate (dnsoll/dt) in dependence on the value (WG) of the variable (G) according to the at least one allocation (ZO) in such a way that the maximum target slope rates (maxdnsoll/dt) of the rotational speed (n) differ for different values (WG) of the variable (G).

12. Hand-guided gardening, forestry and/or construction processing device (1) according to any of the preceding claims,
- wherein the control device (5) is designed to control a torque (M) produced by the electric motor drive system (3) in order to achieve the target slope rate (dnsoll/dt).

13. Hand-guided gardening, forestry and/or construction processing device (1) according to any of the preceding claims,
- wherein the gardening, forestry and/or construction processing device (1) is a saw (1'), a pole pruner, a brushcutter, a blower, a leaf blower or a cut-off grinder.

14. Method for operating a hand-guided gardening, forestry and/or construction processing device (1) according to any of the preceding claims, wherein the method has the following step:
- controlling the target slope rate (dnsoll/dt) of the rotational speed (n) of the electric motor drive system (3) in dependence on the position (ST) of the operating element (4) according to the at least one allocation (ZO) in such a way by means of the control device (5) that the maximum target slope rates (maxdnsoll/dt) of the rotational speed (n) differ for the different positions (ST).

## Revendications

1. Appareil de jardinage, de sylviculture et/ou de construction à main (1), l'appareil de jardinage, de sylviculture et/ou de construction (1) comportant :
- un outil (2),
- un système d'entraînement à moteur électrique (3), le système d'entraînement à moteur électrique (3) étant conçu pour entraîner l'outil (2),
- un élément de service (4) réglable par l'utilisateur et
- un dispositif de commande (5),
**caractérisé en ce que**
le dispositif de commande (5) est conçu pour commander un taux d'augmentation cible (dnsoll/dt) d'une vitesse de rotation (n) du système d'entraînement à moteur électrique (3) en fonction d'une position (ST) de l'élément de service (4) selon au moins une association (ZO) de manière à ce que le taux d'augmentation cible maximal (maxdnsoll/dt) de la vitesse de rotation (n) soit différent pour différentes positions (ST).

2. Appareil de jardinage, de sylviculture et/ou de construction à main (1) selon la revendication 1,
- le dispositif de commande (5) étant conçu pour commander une vitesse de rotation cible (nsoll) et le taux d'augmentation cible (dnsoll/dt) de la vitesse de rotation (n) pour atteindre la vitesse de rotation cible (nsoll) du système d'entraînement à moteur électrique (3) en fonction de la position (ST) selon au moins une association (ZO).

3. Appareil de jardinage, de sylviculture et/ou de construction à main (1) selon la revendication 2,
- le dispositif de commande (5) étant conçu pour commander la vitesse de rotation cible (nsoll) en fonction de la position (ST) selon l'au moins une association (ZO) de manière à ce que les vitesses de rotation cibles (nsoll) soient différentes pour différentes positions (ST).

4. Appareil de jardinage, de sylviculture et/ou de construction à main (1) selon la revendication 2 ou 3,
- le dispositif de commande (5) étant conçu pour commander la vitesse de rotation cible (nsoll) selon au moins une association (ZO) de manière à ce qu'une vitesse de rotation cible minimale (minnsoll) soit égale à au moins 0,1 fois, en particulier au moins 0,2 fois, notamment au moins 0,3 fois, une vitesse de rotation cible maximale (maxnsoll).

5. Appareil de jardinage, de sylviculture et/ou de construction à main (1) selon l'une des revendications 2 à 4,
- le dispositif de commande (5) étant conçu pour détecter une vitesse de rotation réelle (nist) du système d'entraînement à moteur électrique (3), pour déterminer un écart de vitesse de rotation (Δn) en comparant la vitesse de rotation réelle détectée (nist) et la vitesse de rotation cible (nsoll) entre elles et pour commander, en particulier selon au moins une association (ZO), de manière à ce que le taux d'augmentation cible (dnsoll/dt) soit le taux d'augmentation cible maximal (maxdnsoll/dt), lorsqu'une valeur limite d'écart (Δnlimit) est atteinte et/ou dépassée en raison de l'écart de vitesse de rotation (Δn) déterminé, et soit inférieur au taux d'augmentation cible maximal (maxdnsoll/dt) lorsque la valeur limite d'écart (Δnlimit) n'est pas atteinte en raison de l'écart de vitesse (Δn) déterminé.

6. Appareil de jardinage, de sylviculture et/ou de construction à main (1) selon l'une des revendications 2 à 5,
- le dispositif de commande (5) étant conçu pour commander selon au moins une association (ZO) de manière à ce que la vitesse de rotation cible (nsoll) dans une plage de réglage (STB) de l'élément de service (4) allant de sa position de départ (SST) à sa position maximale (maxST) augmente d'une vitesse de rotation cible minimale (minnsoll) à une vitesse de rotation cible maximale (maxnsoll), l'augmentation (ZU) variant au maximum de 20 % ou ne variant pas pour un minimum de 0,2 fois la plage de réglage (STB).

7. Appareil de jardinage, de sylviculture et/ou de construction à main (1) selon l'une des revendications précédentes, notamment selon l'une des revendications 2 à 6,
- le dispositif de commande (5) étant conçu pour commander selon l'au moins une association (ZO) de manière à ce que, pour une petite position (SST), un taux d'augmentation cible maximum (maxdnsoll/dt) soit faible, en particulier et une vitesse de rotation cible (nsoll) soit faible, et, pour une grande position (maxST), un taux d'augmentation cible maximal (maxdnsoll/dt) soit élevé, en particulier et une vitesse de rotation cible (nsoll) soit élevée.

8. Appareil de jardinage, de sylviculture et/ou de construction à main (1) selon la revendication 7,
- une transition (UG) du taux d'augmentation cible maximal (minmaxdnsoll/dt) faible au taux d'augmentation cible maximal (maxmaxdnsoll/dt) élevé s'étendant sur au moins 0,1 fois, en particulier 0,2 fois, en particulier 0,3 fois, la plage de réglage (STB) de l'élément de service (4), et/ou
- une transition (UG) du taux d'augmentation cible maximum (minmaxdnsoll/dt) faible au taux d'augmentation cible maximum (maxmaxdnsoll/dt) élevé commençant au maximum à la moitié, en particulier au quart, de la position maximale (maxST) de l'élément de service (4).

9. Appareil de jardinage, de sylviculture et/ou de construction à main (1) selon l'une des revendications précédentes,
- le dispositif de commande (5) étant conçu pour commander un deuxième taux d'augmentation cible (d²nsoll/dt²) du taux d'augmentation cible (dnsoll/dt) en fonction de la position (ST) de l'élément de service (4) selon l'au moins une association (ZO) de manière à ce que les deuxièmes taux d'augmentation cibles maximaux (maxd²nsoll/dt²) du taux d'augmentation cible (dnsoll/dt) soient différents pour différentes positions (ST).

10. Appareil de jardinage, de sylviculture et/ou de construction à main (1) selon l'une des revendications précédentes,
- le dispositif de commande (5) étant conçu pour détecter une durée de réglage (STt) et/ou une vitesse de réglage (STv) d'un réglage de l'élément de service (4), et
- pour commander lorsque la durée de réglage (STt) détectée atteint et/ou franchit vers le haut une valeur limite de durée (tlimit) et/ou lorsque la vitesse de réglage (STv) détectée atteint et/ou franchit vers le bas une valeur limite de vitesse (vlimit) selon l'association (ZO), et
- pour commander lorsque la durée de réglage (STt) détectée franchit vers le bas la valeur limite de durée (tlimit) et/ou lorsque la vitesse de réglage (STv) détectée franchit vers le haut la valeur limite de vitesse (vlimit) selon une autre association (ZO ') de manière à ce qu'un taux d'augmentation cible maximal (maxdnsoll/dt) soit plus élevé par rapport à l'association (ZO), en particulier soit maximal, pour au moins une des différentes positions (ST).

11. Appareil de jardinage, de sylviculture et/ou de construction à main (1) selon l'une des revendications précédentes,
- l'appareil de jardinage, de sylviculture et/ou de construction (1) comportant un potentiomètre (6),
- l'élément de service (4) étant conçu pour régler une valeur (WG) d'une grandeur électrique (G) du potentiomètre (6), et
- le dispositif de commande (5) étant conçu pour commander le taux d'augmentation cible (dnsoll/dt) en fonction de la valeur (WG) de la grandeur (G) selon l'au moins une association (ZO) de manière à ce que le taux d'augmentation cible maximal (maxdnsoll/dt) de la vitesse de rotation (n) sont différents pour différentes valeurs (WG) de la grandeur (G).

12. Appareil de jardinage, de sylviculture et/ou de construction à main (1) selon l'une des revendications précédentes,
- le dispositif de commande (5) étant conçu pour commander un couple (M) généré par le système d'entraînement à moteur électrique (3) afin d'atteindre le taux d'augmentation cible (dnsoll/dt).

13. Appareil de jardinage, de sylviculture et/ou de construction à main (1) selon l'une des revendications précédentes,
- l'appareil de jardinage, de sylviculture et/ou de construction (1) étant une scie (1'), une élagueuse, une débroussailleuse, un souffleur, un souffleur de feuilles ou une tronçonneuse.

14. Procédé de fonctionnement d'un appareil de jardinage, de sylviculture et/ou de construction à main (1) selon l'une des revendications précédentes, le procédé comportant l'étape suivante :
- commander le taux d'augmentation cible (dnsoll/dt) de la vitesse de rotation (n) du système d'entraînement à moteur électrique (3) en fonction de la position (ST) de l'élément de service (4) selon au moins une association (ZO) au moyen du dispositif de commande (5) de manière à ce que les taux d'augmentation cibles maximum (maxdnsoll/dt) de la vitesse de rotation (n) soient différents pour les différentes positions (ST).
